# EUROPÄISCHE PATENTSCHRIFT

(11) **EP 1 397 390 B1**
(45) Veröffentlichungstag und Bekanntmachung des Hinweises auf die Patenterteilung: **09.01.2008**
(21) Anmeldenummer: 02740463.1
(22) Anmeldetag: 11.04.2002
(51) Int. Cl.: C08C 19/00, C08C 19/44, C08C 19/42

(54) **MODIFIZIERTE POLYMERE MIT EINEM HOHEN ANTEIL AN CIS-STÄNDIGEN DOPPELBINDUNGEN, EIN VERFAHREN ZU DEREN HERSTELLUNG SOWIE DEREN VERWENDUNG**
MODIFIED POLYMERS WITH A HIGH PROPORTION OF CIS-POSITION DOUBLE BONDS, METHOD FOR THE PRODUCTION AND USE THEREOF
POLYMERES MODIFIES A FORTE PROPORTION DE LIAISONS DOUBLES EN POSITION CIS, LEUR PROCEDE DE PRODUCTION ET LEUR UTILISATION

(30) Priorität: 23.04.2001 DE 10119745; 18.10.2001 DE 10151391
(43) Veröffentlichungstag der Anmeldung: 17.03.2004
(73) Patentinhaber: LANXESS Deutschland GmbH, 51369 Leverkusen (DE)
(72) Erfinder: GRÜN, Michael, 53721 Siegburg (DE); KNAUF, Thomas, 41542 Dormagen (DE); BRAUBACH, Wilfried, 42659 Solingen (DE)
(86) Internationale Anmeldenummer: PCT/EP2002/004038
(87) Internationale Veröffentlichungsnummer: WO 2002/085952

(56) Entgegenhaltungen:
- EP-A- 0 011 184
- EP-A- 1 050 545
- WO-A-02/16448
- GB-A- 1 173 508

## Beschreibung

Die vorliegende Erfindung betrifft Polymere auf Basis von konjugierten Dienen oder von konjugierten Dienen und vinylaromatischen Verbindungen, die durch polare Gruppen entlang der Polymerkette modifiziert sind und einen hohen Anteil an cis-ständigen Doppelbindungen enthalten.

Es ist bekannt, Polymere mit organischen Verbindungen, die mindestens eine polare und eine zur Reaktion mit den Polymeranionen fähige Gruppe im Molekül enthalten, zu modifizieren. Die Modifizierung der Polymere wird üblicherweise so durchgeführt, dass man Polymere, die aktive Wasserstoffatome enthalten, zunächst metallisiert und anschließend mit den genannten organischen Verbindungen umsetzt. Verwiesen wird in diesem Zusammenhang auf EP-A 1050 545, US-A 3 925 511, US-A 4 761 456 sowie US-A 3 978 161. Die nach dem bisherigen Stand der Technik modifizierten Polymere werden bevorzugt im Reifenbau eingesetzt, um die Wechselwirkung der im Reifen vorhandenen Füllstoffe zu dem Kautschuk zu verbessern. Nachteilig beim Einsatz solcher modifizierten Polymere, die gemäß ihrem Herstellungsverfahren einen geringen Anteil an cis-ständigen Doppelbindungen enthalten, ist, dass sie nur schlecht in Kautschukmischungen eingearbeitet werden können und dass das mechanisch/dynamische Eigenschaftsprofil der so hergestellten Kautschukformkörper im Vergleich zu den üblicherweise verwendeten, nicht modifizierten Polymere, wie Polybutadiene, verschlechtert wird.

In EP 1 022 291 A1 werden modifizierte Dienelastomere beschrieben, die zwar einen hohen cis-Anteil besitzen, aber aufgrund ihrer Herstellungsweise einen sehr hohen Gelgehalt aufweisen. Darüber hinaus sind die dort beschriebenen Dienelastomere nicht entlang der Kette modifiziert, sondern durch spezielle Silizium-organische Verbindungen in der Endgruppe.

Aus der britischen Patentanmeldung GB 1173508 A ist die Herstellung von Homopolymerisate bzw. Copolymerisate z.B. durch ionische Polymerisation bekannt sowie deren Funktionalisierung mit entsprechenden funktionellen Gruppen enthaltenden organischen Verbindungen. Die danach hergestellten Homopolymerisate bzw. Copolymerisate weisen einen cis-1,4-Gehalt von ca. 92 % auf. Der durch das Herstellungsverfahren bedingte Gelgehalt dürfte aber über 5 Gew.-% betragen und schränkt daher den praktischen Einsatz solcher Polymere stark ein.

Aufgabe der vorliegenden Erfindung ist es nun, die Nachteile der bisher eingesetzten modifizierten Polymere zu vermeiden, d.h. deren Einarbeitbarkeit in Kautschukmischungen und die mechanisch/dynamischen Eigenschaften der so hergestellten Kautschukfonmkörper zu verbessern ebenso wie den Gelgehalt.

Die zuvor genannten Nachteile bei der Herstellung von Kautschukformkörpern unter Einsatz von bekannten, modifizierten Polymeren können nun dadurch vermieden werden, dass man Polymere, die entlang der Polymerkette, d.h. nicht am Kettenende modifiziert sind, verwendet auf Basis von konjugierten Dienen oder von konjugierten Dienen und vinylaromatischen Verbindungen, die u.a. einen hohen Anteil an cis-ständigen Doppelbindungen und einen sehr geringen Gelgehalt aufweisen.

Gegenstand der vorliegenden Erfindung sind daher entlang der Polymerkette modifizierte Polymere auf Basis von konjugierten Dienen oder von konjugierten Dienen und vinylaromatischen Verbindungen mit einem Anteil an vinylaromatischen Verbindungen von bis zu 60 Gew.-%, einem Gehalt an cis-ständigen Doppelbindungen von ≥ 95 %, einem mittleren Molekulargewicht (M_{w}) von 50 000 bis 1 500 000 g/mol, einem Gelgehalt von ≤ 5 % und einem Modifizierungsgrad von 0,05 bis 20 Gew.-%.

Die erfindungsgemäßen modifizierten Polymere besitzen ein mittleres Molekulargewicht (M_{w}) (bestimmt mit GPC = Gelpermeationschromatographie) von bevorzugt 200 000 bis 700 000 g/Mol. Die Glasübergangstemperatur (T_{G}) beträgt -90 bis -110°C, bevorzugt -95 bis -108°C, bestimmt mit DSC.

Als konjugierte Diene kommen z.B. 1,3-Butadien, Isopren, Piperylen, 1,3-Hexadien, 1,3-Octadien sowie 2-Phenyl-1,3-butadien, bevorzugt 1,3-Butadien, in Frage.

Als vinylaromatische Verbindungen, die mit den konjugierten Dienen copolymerisiert werden können, werden z.B. genannt: Styrol, p-Methylstyrol, α-Methylstyrol, 3,5-Dimethylstyrol, Vinylnaphthalin, p-tert.-Butylstyrol, Divinylstyrol und Diphenylethylen, bevorzugt Styrol.

Der Anteil der mit den konjugierten Dienen copolymerisierbaren vinylaromatischen Monomeren in den entsprechenden Copolymerisaten beträgt bevorzugt 10 bis 45 Gew.-%.

Die modifizierten erfindungsgemäßen Polymere besitzen ein Gelgehalt von bevorzugt ≤ 3 %, insbesondere ≤ 1 % bestimmt nach ASTM D 3616-95 (Standard Test Method for Rubber, Raw-Determination of Gel, Swelling Index, and Dilute Solution Viscosity).

Der Modifizierungsgrad der modifizierten erfindungsgemäßen Polymere beträgt bevorzugt 0,08 bis 5 Gew.-%, insbesondere 0,1 bis 2 Gew.-%, bestimmt durch Elementaranalyse der bei der Modifizierung verwendeten organischen Verbindungen, die polare Gruppen mit den Elementen der III., IV., V., VI., oder VII. Hauptgruppe des Periodensystems der Elemente (PSE) enthalten.

Ein weiterer Gegenstand der vorliegenden Erfindung ist ein Verfahren zur Herstellung von entlang der Polymerkette modifizierten Polymeren auf Basis von konjugierten Dienen oder von konjugierten Dienen und vinylaromatischen Verbindungen mit den zuvor genannten Anteilen an vinylaromatischen Verbindungen, dem zuvor genannten Gehalt an cis-ständigen Doppelbindungen, dem mittleren Molekulargewicht, dem Gelgehalt und dem Modifizierungsgrad, dass dadurch gekennzeichnet ist, dass man (a) die konjugierten Diene oder die konjugierten Diene und vinylaromatischen Verbindungen bei Temperaturen von -30 bis 130°C in Gegenwart von Verbindungen der Seltenen Erdmetalle und in Gegenwart eines inerten, aliphatischen Lösungsmittels polymerisiert, wobei der Wassergehalt des Reaktionsgemischs ≤ 1 000 ppm, bevorzugt ≤ 500 ppm, beträgt, (b) die erhaltenen 1,0 bis 1000, bevorzugt 1,5 bis 100, insbesondere 2 bis 30, mmol/100 g Polymer aktive Wasserstoffatome enthaltene Polymere mit 0,1 bis 200 mmol, bezogen auf 100 g Polymer, metallorganischen Verbindungen oder mit den Metallen selbst, wobei die Metalle der metallorganischen Verbindungen auszuwählen sind aus der Gruppe der Alkali- oder Erdalkalimetalle, umsetzt, in Gegenwart von 0,1 bis 200 mmol, bezogen auf 100 g Polymer, zur koordinativen Bindung mit den metallisierten Polymeranionen-fähigen Verbindungen bei Temperaturen von 20 bis 200°C und (c) bei Temperaturen von 0 bis 200°C die erhaltenen, stabilisierten Polymeranionen mit 0,01 bis 200 mmol, bezogen auf 100 g Polymer, organischen Verbindungen umsetzt, die eine zur Reaktion mit den Polymeranionen-fähige Gruppe und mindestens eine polare Gruppe im Molekül enthalten, wobei die polaren Gruppen Elemente der III., IV., V., VI. oder VII. Hauptgruppe des PES oder Kombinationen davon enthalten, und die zur Reaktion mit den Polymeranionen-fähigen Gruppen auszuwählen sind aus Carbonylgruppen, Säurechloridgruppen, Metallhalogenidgruppen, Sulfenylgruppen, Sulfonylgruppen, Aminochloridgruppen, reaktive Doppelbindungen enthaltende Gruppen, Epoxidgruppen, Isocyanatgruppen, Nitrilgruppen sowie Silizium- und Zinn-organische Gruppen, in Anwesenheit von aprotischen, organischen Lösungsmitteln umsetzt.

Als organische Verbindungen, die bevorzugt 1 bis 5 polare und nur eine zur Reaktion mit den Polymeranionen fähige Gruppierung oder Gruppe im Molekül enthalten, und die geeignet sind, die oben genannten Polymere zu modifizieren, kommen bevorzugt solche in Betracht, die Bor, Silizium, Kohlenstoff, Zinn, Stickstoff, Sauerstoff, Schwefel, Fluor, Chlor und Brom, insbesondere Silizium, Zinn, Stickstoff, Sauerstoff und Chlor in den polaren Gruppen enthalten.

Als solche polare Gruppen kommen beispielsweise in Betracht: Hydroxylgruppen, Carboxylgruppen, Aminogruppen, Estergruppen, Carbonylgruppen, Halogene, Epoxidgruppen, Ethergruppen, Nitrilgruppen, Thioethergruppen, Sulfonsäureestergruppen, Phosphorsäure- und Phosphorigsäureestergruppen, Ammoniumgruppen, Zinn-organische Gruppen sowie Silizium-organische Gruppen, wie offenkettige oder cyclische Siloxan- oder Silangruppen. Bevorzugt sind Estergruppen, Ammoniumgruppen, Aminogruppen sowie die erwähnten Silizium-organischen und Zinn-organischen Gruppen. Ganz besonders bevorzugt sind Zinn-organische Gruppen, Aminogruppen sowie offenkettige oder cyclische Siloxan- oder Silangruppen.

Als zur Reaktion mit den Polymeranionen fähige Gruppierungen oder Gruppen sind insbesondere zu nennen: Aldehyd- und Ketogruppen, Sulfonsäurechlorid- und Phosphorsäurechloridgruppen, Siliziumchloridgruppen, Zinnchloridgruppen, Epoxidgruppen, Isocyanatgruppen, offenkettige oder cyclische Siloxangruppen und Zinn-organische Gruppen. Bevorzugt sind besonders: Sulfenylchloridgruppen, Aldehyd- und Ketogruppen, Epoxidgruppen, Carbonsäurechloridgruppen, Isocyanatgruppen, offenkettige oder cyclische Siloxangruppen und Alkylzinnhalogenidgruppen.

Als organische Verbindungen, die geeignet sind, die Polymere zu modifizieren, kommen auch solche in Betracht, bei denen während der Reaktion mit den Polymeranionen eine oder mehrere polare Gruppen entstehen. Darunter fallen beispielsweise solche organische Verbindungen, die Epoxidgruppen, Aldehyd- und Ketogruppen, Carboxylgruppen, Isocyanatgruppen sowie Silangruppen enthalten. Zum Beispiel epoxidiertes Sojabohnenöl, epoxidierte Siloxane, wie 3-Glycidyloxypropyl-pentamethyldisiloxan, epoxidierte Silane, wie 2-(3,4-Epoxidcyclohexyl)-ethyl-trimethoxysilan, Phenylethylenoxid, Epichlorhydrin, Ethylenoxid, 1,2-Epoxidcyclopentan, p-Dimethylbenzaldehyd, Butylisocyanat, Ethylisocyanat, Cyclohexylisocyanat, 3-Isocyanatopropyl-triethoxy-silan und 2-Isocyanatoethyl-methylacrylat.

Insbesondere werden als organische Verbindungen, die mindestens eine polare und nur eine zur Reaktion mit dem Polymeranionen fähige Gruppierung im Molekül enthalten, oder die während der Reaktion mit den Polymeranionen eine oder mehrere polare Gruppen ausbilden, genannt: Morpholin-N-carbonsäurechlorid, N-N-Dimethylcarbamidsäurechlorid, Epichlorhydrin, 3-Isocyanatopropyl-triethoxysilan, Propylenoxid, Butylisocyanat, 3-Glycidyloxidpropyl-pentamethyldisiloxan, Kohlendioxid, Dimethylaminoethylacrylat, Vinylimidazol sowie Tri-n-butylzinnchlorid. Selbstverständlich können die genannten Verbindungen auch im Gemisch untereinander eingesetzt werden.

Die Menge an organischen Verbindungen, die zur Modifizierung der Polymere eingesetzt wird, richtet sich insbesondere nach der gewünschten Wechselwirkung zwischen Füllstoff und vorhandenem Kautschuk. In Abhängigkeit von der jeweiligen Polarität der in den organischen Verbindungen vorhandenen Gruppierungen können schon wenige polare Gruppen bzw. Gruppierungen eine spürbare Wechselwirkung mit den Füllstoffen bewirken. Daher kann praktisch schon eine polare Gruppe im modifizierten Polymeren genügen, um eine merkliche Wechselwirkung mit den Füllstoffen einzugehen. Dies bedeutet daher, dass die eingesetzten Mengen an polaren, organischen Verbindungen in einem breiten Bereich variieren können. Bevorzugt werden in der Praxis die organischen Verbindungen in Mengen von 0,05 bis 100 mmol, insbesondere 0,1 bis 50 mmol, bezogen auf 100 g Polymer, eingesetzt.

Wie erwähnt, wird die Polymerisation der zum Aufbau der Polymeren dienenden Monomeren erfindungsgemäß in Gegenwart von Seltene-Erdmetall-Katalysatoren durchgeführt.

Der Einsatz von Seltene-Erdmetall-Katalyatoren bei der Polymerisation ist für die erfindungsgemäßen, metallisierten Polymeranionen von Bedeutung, da sich nur mit diesen Katalysatoren bestimmte physikalische Eigenschaften erzielen lassen, die zur Lösung der erfindungsgemäßen Aufgabe beitragen.

Als Seltene-Erdmetall-Katalysatoren werden Verbindungen der Seltenen Erdmetalle eingesetzt, wie Cer-, Lanthan-, Praseodym-, Gadolinium- oder Neodymverbindungen, die in Kohlenwasserstoffen löslich sind. Besonders bevorzugt werden die entsprechenden Salze der Seltenen Erdmetalle als Katalysatoren eingesetzt, wie Neodym-carboxylate, insbesondere Neodym-neodecanoat, Neodymoctanoat, Neodymnaphthenat, Neodym-2,2-diethyl-hexanoat, Neodym-2,2-diethyl-heptanoat, sowie die entsprechenden Salze des Lanthans oder Praseodyms. Ganz besonders bevorzugt ist Neodym-neodecanoat.

Die oben erwähnten Seltene-Erdmetall-Katalysatoren sind bekannt und beispielsweise beschrieben in der Deutschen Patentanmeldung mit der Anmeldungsnummer 19 951 841.6 sowie in DE-A 28 48 964 und DE-A 26 25 390.

In einer bevorzugten Ausführungsform wird die Polymerisation der ungesättigten Monomeren in Gegenwart eines Seltenen-Erdmetall-Katalysator-Systems durchgeführt, wie beschrieben in der deutschen Patentanmeldung Nr. 19 951 841.6.

Eingesetzt wird gemäß der genannten deutschen Patentanmeldung ein Katalysatorsystem auf Basis von Verbindungen der Seltenen Erdmetalle, bestehend aus
a) einer Verbindung der Seltenen Erdmetalle,
b) einer organischen Aluminium-Verbindung
c) einem Trihalogensilan der Formel 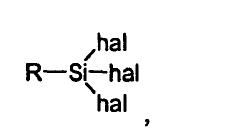
wobei
- hal: für Fluor, Chlor und Brom steht und
- R: Wasserstoff oder eine Vinylgruppe bedeutet,
worin die Komponenten a) : b) : c) in wasserfreier Form (Wassergehalt: ≤1 000 ppm, bevorzugt ≤500 ppm , bezogen auf eine 20 gew.-%ige Lösung der Komponente a) in einem inerten, aliphatischen Lösungsmittel) in einem Verhältnis von 1 : 0,5 bis 5 : 0,05 bis 0,5 vorliegen.

Als Komponente a) des eben genannten Katalysator-Systems auf Basis von Verbindungen der Seltenen Erdmetalle werden die bereits erwähnten Verbindungen der Seltenen Erdmetalle eingesetzt; als organische Aluminium-Verbindung (Komponente b) kommen insbesondere Aluminiumalkyle und Aluminiumalkylhydride in Betracht, in denen die Alkylgruppe 1 bis 10, bevorzugt 1 bis 6, Kohlenstoffatome besitzt. Die Aluminiumalkylhydride können eine oder zwei Alkylgruppen besitzen. Bevorzugt sind zu nennen: Aluminiumtriethyl, Diisobutylaluminiumhydrid, Aluminiumtriisobutyl, ganz besonders bevorzugt Diisobutylaluminiumhydrid. Bevorzugt wird als Trihalogensilan (Komponente c) Trichlorsilan eingesetzt.

Bevorzugt sind erfindungsgemäß Katalysatorsysteme auf Basis von Verbindungen der Seltenen Erdmetalle, in denen die Komponenten a) : b) : c) in einem Gewichtsverhältnis von 1 : 1 bis 2 : 0,1 bis 0,4 vorliegen und die Komponente a) Neodymversatat ist, die Komponente b) Diisobutylaluminiumhydrid darstellt und Komponente c) Trichlorsilan bedeutet.

Die Metallisierung, der durch Polymerisation mit Seltenen Erdmetallen erhaltenen Polymere, die die oben erwähnte Menge an aktive Wasserstoffatome im Molekül enthalten, wird durchgeführt, in dem man die Polymere mit geeigneten metallorganischen Verbindungen in Gegenwart von zur koordinativen Bindung fähigen Reagenzien umsetzt.

Als metallorganische Verbindungen für die Metallisierung können alle aus dem Stand der Technik bekannten metallorganischen Verbindungen eingesetzt werden, inklusive der Metalle selbst. Vor allem werden als metallorganische Verbindungen alkalimetall- oder erdalkalimetallorganische Verbindungen oder deren zugrundeliegende Metalle eingesetzt, wobei Lithium oder dessen entsprechende organische Verbindungen bevorzugt sind. Ganz besonders bevorzugt sind lithiumorganische Verbindungen, welche durch die Formel R-Li repräsentiert werden, wobei R ein Hydrocarbyl-Radikal symbolisiert, mit 1 bis 20 C-Atomen. Bevorzugt beinhalten solche monofunktionellen lithiumorganischen Verbindungen 1 bis 10 C-Atome. Zum Beispiel werden genannt: Methyllithium, Ethyllithium, Isopropyllithium, n-Butyllithium, sec-Butyllithium, n-Octyllithium, tert.-Octyllithium, n-Decyllithium, Phenyllithium, 1-Naphtyllithium, 4-Butylphenyllithium, p-Tolyllithium, 4-Phenylbutyllithium, Cyclohexyllithium, 4-Butylcyclohexyllithium und/oder 4-Cyclohexylbutyllithium. Bevorzugt sind Ethyllithium, Isopropyllithium, n-Butyllithium, sec-Butyllithium, n-Hexyllithium, tert.-Octyllithium, Phenyllithium, 2-Naphthyllithium, 4-Butylphenyllithium, und/oder Cyclohexyllithium. n-Butyllithium und/oder sec-Butyllithium sind ganz besonders bevorzugt.

Die Menge an einzusetzenden metallorganischen Verbindungen bzw. Metallen für die Metallisierungsreaktion hängt insbesondere ab von den in den erhaltenen Polymeren enthaltenden aktiven Wasserstoffatomen und beträgt bevorzugt 0,05 bis 100, insbesondere 0,1 bis 50 mmol, bezogen auf 100 g Polymer.

Die optimale Menge an metallorganischen Verbindungen bzw. Metalle kann leicht durch Vorversuche ermittelt werden.

Zur Stabilisierung der metallisierten Polymere bzw. Polymeranionen wird in bekannter Weise die Metallisierung in Gegenwart von zur koordinativen Bindung fähigen Reagenzien durchgeführt. Solche zur koordinativen Bindung fähigen Reagenzien sind ebenfalls aus dem zuvor diskutierten Stand der Technik bekannt.

Als zur koordinativen Bindung fähigen Reagenzien kommen beispielsweise in Betracht: tert. Diamine mit drei gesättigten aliphatischen Kohlenwasserstoffresten, cyclische Diamine oder verbrückte Diamine. Zu nennen sind insbesondere Tetramethylethylendiamin, Tetraethylethylendiamin, Tetradecylethylendiamin, Tetraalkyl-1,2-diaminocyclohexan, Tetraalkyl-1,4-diaminocyclohexan, Piperazine, N,N'-Dimethyl-piperazin sowie Spartein oder Triethylendiamin. Selbstverständlich können die genannten Amine einzeln oder im Gemisch untereinander eingesetzt werden.

Weiterhin können als zur koordinativen Bindung fähigen Reagenzien die bekannten Alkalimetallalkoxide sowie die Alkalimetallphenoxide oder Kronenpolyether eingesetzt werden. Zu nennen sind insbesondere Kalium tert.-amyloxid, Natrium tert.-amyloxid und/oder Kalium tert.-butyloxid.

Die Menge an einzusetzenden zur koordinativen Bindung fähigen Reagenzien beträgt bevorzugt 0,05 bis 100 mmol, insbesondere 0,1 bis 50 mmol, bezogen auf 100 g Polymer.

Die Polymerisation der zuvor genannten ungesättigten Monomeren in Gegenwart der erwähnten Katalysatoren wird üblicherweise bei Temperaturen im Bereich von bevorzugt 20 bis 100°C, gegebenenfalls unter erhöhtem Druck (2 bis 10 kPa) durchgeführt.

Es ist üblich, die Polymerisation in Gegenwart von inerten, aliphatischen Lösungsmitteln, wie Pentane, Hexane, Heptane, Methylcyclopentan oder Cyclohexan, durchzuführen. Bei diesen aliphatischen Lösungsmitteln kommen sowohl die geradkettigen als auch deren verzweigten Isomeren in Betracht. Weiterhin können auch aromatische Lösungsmittel, wie Benzol, Toluol oder Ethylbenzol, verwendet werden. Die Lösungsmittel können sowohl einzeln als auch im Gemisch untereinander eingesetzt werden; das günstige Mischungsverhältnis ist durch entsprechende Vorversuche leicht zu ermitteln.

Die Menge an Lösungsmittel beträgt bei dem erfindungsgemäßen Verfahren üblicherweise 1000 bis 100 g, bevorzugt 500 bis 150 g, bezogen auf 100 g der gesamten Menge an eingesetztem Monomer. Selbstverständlich ist es auch möglich, die eingesetzten Monomere in Abwesenheit von Lösungsmitteln zu polymerisieren.

Die erfindungsgemäße Polymerisation der ungesättigten Monomeren in Gegenwart der genannten Katalysatoren kann bis zum vollständigen Umsatz der eingesetzten Monomeren durchgeführt werden. Selbstverständlich ist es auch möglich, die Polymerisation in Abhängigkeit der gewünschten Polymer-Eigenschaften vorzeitig zu unterbrechen, beispielsweise beim Umsatz von ca. 80 % der Monomeren.

Die erfindungsgemäße Polymerisation der ungesättigten Monomeren in Gegenwart der Katalysatoren wird in bevorzugter Weise so geführt, das nur noch ein Restgehalt an eingesetzten Monomeren in der Polymermischung von maximal 0,5 Gew.-%, bevorzugt kleiner als 500 ppm verbleibt.

Bei der erfindungsgemäßen Herstellung der ungesättigten Polymeranionen ist es möglich, die aus der Polymerisation der ungesättigten Monomeren in Gegenwart der eingesetzten Katalysatoren erhaltenen Polymerisate in bekannter Weise zunächst zu Isolieren, zu Reinigen und Aufzuarbeiten und anschließend die isolierten Polymere einer Metallisierungsreaktion zu unterwerfen.

Darüber hinaus ist es möglich, die bei der Polymerisation erhaltenen Polymerisate direkt, d.h. in situ, zu metallisieren. Bevorzugt ist, die Metallisierung in situ durchzuführen.

Die Metallisierungsreaktion wird bevorzugt bei Temperaturen im Bereich von 40 bis 120°C, in Gegenwart von den oben erwähnten inerten Lösungsmitteln durchgeführt.

Beispielsweise können die erfindungsgemäßen metallisierten Polymeranionen wie folgt hergestellt werden:
In einem Autoklaven, versehen mit einem Rührwerk, werden die zu polymerisierenden Monomere und das entsprechende Lösungsmittel vorgelegt und anschließend wird der Seltene-Erdmetall-Katalysator zu der Lösung zudosiert. Der Autolav wird vorher durch Spülen mit einem Inertgas, wie Stickstoff, inertisiert. Nach Erreichen des gewünschten Umsatzes wird in bevorzugter Weise in situ das erhaltene Polymere, durch Umsetzung mit zur koordinativen Bindung fähigen Reagenzien in Gegenwart von den erwähnten metallorganischen Verbindungen metallisiert. Bei der Arbeitsweise in situ und bei einem nicht vollständigen Monomer-Umsatz ist es von Vorteil, wenn man die nicht umgesetzten Monomere vorher, d.h. vor der Metallisierungsreaktion, aus der Polymermischung entfernt.

Die Herstellung solcher metallisierten Polymeranionen ist beschrieben in DE-A 10041 195.

Nach dem erfindungsgemäßen Verfahren werden die so erhaltenen, metallisierten Polymeranionen mit organischen Verbindungen, die mindestens eine polare und eine zur Reaktion mit den Polymeranionen fähige Gruppe im Molekül enthalten, in Gegenwart von aprotischen organischen Lösungsmitteln umgesetzt.

Als aprotische organische Lösungsmittel kommen beispielsweise in Betracht: Pentane, Hexane, Heptane, Cyclohexan, Methylcyclopentan, Benzol, Toluol, Ethylbenzol, bevorzugt Hexane, Cyclohexan, Toluol, ganz besonders bevorzugt Hexan.

Die Menge an aprotischen, organischen Lösungsmitteln kann leicht durch entsprechende Vorversuche ermittelt werden und beträgt üblicherweise 100 bis 1 000 g, bevorzugt 150 bis 500 g, bezogen auf eine 100 g der gesamten Menge an eingesetztem Monomer.

Die Umsetzung der metallisierten Polymeranionen mit den genannten organischen Verbindungen wird bevorzugt bei 20°C bis 120°C durchgeführt.

Die Umsetzung der organischen Verbindungen mit den metallisierten Polymeranionen wird üblicherweise ohne Zwischenisolierung der metallisierten Polymeranionen in situ durchgeführt.

Die zur Modifizierung eingesetzten organischen Verbindungen werden in den zuvor genannten Mengen eingesetzt.

Die Aufarbeitung der modifizierten Polymere geschieht beispielsweise in der Weise, dass man dem Reaktionsgemisch Wasser bzw. Alkohole oder Gemische von Alkoholen und Wasser zugibt, wobei die modifizierten Polymere ausfallen. Diese werden dann in üblicher Weise isoliert, beispielsweise durch Abfiltrieren der modifizierten Polymere.

Bei der Isolierung der modifizierten Polymere ist es üblich, diese durch Zugabe von geeigneten Stabilisatoren, beispielsweise durch Zugabe von Irganox^{®} 1520, in dafür üblichen Mengen zu stabilisieren.

Die erfindungsgemäßen modifizierten Polymere können selbstverständlich mit anderen modifizierten bzw. nicht modifizierten Kautschuken, wie SSBR, hoch-cis BR und LiBR, abgemischt werden, um besonders günstige physikalische und technische Eigenschaften in den herzustellenden Kautschukformkörpern zu erreichen. Das günstigste Mischungsverhältnis kann leicht durch entsprechende Vorversuche bestimmt werden. Üblicherweise werden die eben genannten Kautschuke in Mengen von 5 Gew.-Teile bis 60 Gew.-Teile, bezogen auf 100 Gewichtsteile der erfindungsgemäßen Polymere, eingesetzt.

Darüber hinaus können die erfindungsgemäßen, modifizierten Polymere selbstverständlich noch mit den üblichen Vemetzungsmitteln, Kautschukhilfs- und Zusatzstoffen, wie Mineralölweichmacher, Lichtschutzwachs, Alterungsschutzmittel, Vulkanisationsbeschleuniger, Silane, Schwefel, sowie den üblichen Verstärkungsstoffen abgemischt werden in den dafür bekannten und üblichen Mengen. Zu nennen sind als Verstärkungsstoffe insbesondere Silika und Ruß einzeln oder im Gemisch untereinander. Verwiesen wird in diesem Zusammenhang u.a. auf die entsprechenden Artikel in Handbuch der Gummiindustrie, 2. Ausgabe, 1991, Herausgeber: Bayer AG.

Ein weiterer Gegenstand der vorliegenden Erfindung ist die Verwendung der modifizierten Polymere zur Herstellung von Kautschukformkörpern aller Art, insbesondere zur Herstellung von Reifen und Reifenbauteilen. Darüber hinaus können insbesondere die modifizierten Polybutadiene eingesetzt werden zur Herstellung von Golfbällen und von schlagzähmodifizierten Kunststoffen, wie z.B. HIPS und ABS.

### Beispiele

### Beispiel 1

### 1) Herstellung von mit Lithium metallisiertem Polybutadien, das durch Polymerisation von Butadien mit Seltene-Erdmetall-Katalysatoren erhalten wurde

In einem mit Stickstoff gespülten und mit einem Rührer versehenen Autoklaven wurden 8 200 g technisches Hexan vorgelegt. Danach wurde unter Rühren zu dem vorgelegten Hexan 2 mmol Neodymversatat, 22,0 mmol Diisobutylaluminiumhydrid und 1,9 mmol Trichlorsilan gegeben. Zu diesem Gemisch wurde dann 1 800 g getrocknetes, destabilisiertes 1,3-Butadien zudosiert, Die Polymerisation des 1,3-Butadiens wurde bei einer Temperatur von 60°C bis zu quantitativen Umsatz des Monomers durchgeführt.

Das dabei erhaltene Polybutadien wurde direkt - in situ - mit 0,1 mol getrocknetem N,N,N',N'-Tetramethylethylendiamin und 0,1 mol n-Butyllithium versetzt und das Gemisch bei einer Temperatur von 100°C ca. 1 Stunde gerührt.

### 2) Umsetzung des metallierten Polybutadienanions mit Säurechloriden

Das in 1) erhaltene metallisierte Polybutadienanion wurde mit jeweils 0,2 mol N,N-Dimethylcarbamidsäurechlorid oder Morpholin-N-Carbonsäurechlorid versetzt und das Gemisch ca. eine Stunde bei 100°C gerührt. Danach wurde der Reaktorinhalt abgekühlt und die Reaktion mit Ethanol abgestoppt. Das erhaltene Produkt wurde anschließend mit Irganox^{®} 1520 stabilisiert und bei 60°C getrocknet.

Die Analyse der erhaltenen modifizierten Polymere ergab folgende Daten:
a) mit Dimethylcarbamidsäurechlorid modifiziert
b) mit Morpholin-N-Carbonsäurechlorid modifiziert

| | | | | Mikrostruktur | | | GPC | | | DSC | Elementar-analyse |
|---|---|---|---|---|---|---|---|---|---|---|---|
| | ML 1+4 | LV vor Modifizierung | LV nach Modifizierung | cis | trans | vinyl | Mw | Mn | Polydispersität | Tg | N |
| | ME | mPas | mPas | % | % | % | g/mol | g/mol | | °C | ppm |
| a) | 46 | 488 | 174 | 97,0 | 1,8 | 1,2 | 633490 | 183126 | 3,5 | -104,7 | 230 |
| b) | 41 | 441 | 145 | 98,0 | 1,5 | 0,4 | 643426 | 172296 | 3,7 | -106,8 | 329 |

| | | | | | | | | | | | |
|---|---|---|---|---|---|---|---|---|---|---|---|
| LV: Lösungsviskosität Der Gelgehalt der modifizierten Polymere betrug 1 %. | | | | | | | | | | | |

### Beispiel 2

### 1) Herstellung von mit Lithium metallisiertem Polybutadien, das durch Polymerisation von Butadien mit Seltene-Erdmetall-Katalysatoren erhalten wurde

In einem mit Stickstoff gespülten und mit einem Rührer versehenen Autoklaven wurden 8 200 g technisches Hexan vorgelegt. Danach wurde unter Rühren zu dem vorgelegten Hexan 2 mmol Neodymversatat, 22,0 mmol Diisobutylaluminiumhydrid und 1,9 mmol Trichlorsilan gegeben. Zu diesem Gemisch wurde dann 1800 g getrocknetes, destabilisiertes 1,3-Butadien zudosiert, Die Polymerisation des 1,3-Butadiens wurde bei einer Temperatur von 60°C bis zu quantitativen Umsatz des Monomers durchgeführt.

Das dabei erhaltene Polybutadien wurde direkt - in situ - mit 0,1 mol getrocknetem N,N,N',N'-Tetramethylethylendiamin und 0,1 mol n-Butyllithium versetzt und das Gemisch bei einer Temperatur von 100°C ca. 1 Stunde gerührt.

### a) Umsetzung des metallierten Polybutadienanions mit Epoxidgruppen enthaltenden Verbindungen

Das in 1) erhaltene metallisierte Polybutadienanion wurde mit 100 ml epoxydiertem Sojabohnenöl (ESBO) versetzt und das Gemisch ca. eine Stunde bei 100°C gerührt. Danach wurde der Reaktorinhalt abgekühlt und die Reaktion mit Ethanol abgestoppt. Das erhaltene Produkt wurde anschließend stabilisiert und bei 60°C getrocknet.

Die Analyse der erhaltenen modifizierten Polymere ergab folgende Daten:

| | | | Mikrostruktur | | | GPC | | | DSC |
|---|---|---|---|---|---|---|---|---|---|
| ML 1+4 | LV vor Modifizierung | LV nach Modifizierung | cis | trans | vinyl | Mw | Mn | Polyd. | Tg |
| ME | mPas | mPas | % | % | % | g/mol | g/mol | | °C |
| 60 | 1587 | 378 | 98,5 | 1,0 | 0,5 | 790128 | 244375 | 3,20 | -100,7 |

| | | | | | | | | | |
|---|---|---|---|---|---|---|---|---|---|
| LV: Lösungsviskosität | | | | | | | | | |

### b) Umsetzung des metallierten Polybutadienanions mit Epichlorhydrin

Das in 1) erhaltene metallisierte Polybutadienanion wurde mit 0,12 mol Epichlorhydrin versetzt und das Gemisch ca. eine Stunde bei 100°C gerührt. Danach wurde der Reaktorinhalt abgekühlt und die Reaktion mit Ethanol abgestoppt. Das erhaltene Produkt wurde anschließend stabilisiert und bei 60°C getrocknet.

Die Analyse des erhaltenen modifizierten Polymer ergab folgende Daten:

| | | | Mikrostruktur | | | GPC | | | DSC | Elementar-analyse |
|---|---|---|---|---|---|---|---|---|---|---|
| ML 1+4 | LV vor Modifizierung | LV nach Modifizierung | cis | trans | vinyl | Mw | Mn | Polyd. | Tg | Cl |
| ME | mPas | mPas | % | % | % | g/mol | g/mol | | °C | % |
| 48 | 741 | 429 | 98,2 | 1,3 | 0,5 | 634378 | 182,396 | 3,5 | -105,3 | 0,06 |

| | | | | | | | | | | |
|---|---|---|---|---|---|---|---|---|---|---|
| LV: Lösungsviskosität | | | | | | | | | | |

### Beispiel 3

### 1) Herstellung von mit Lithium metallisiertem Polybutadien, das durch Polymerisation von Butadien mit Seltene-Erdmetall-Katalysatoren erhalten wurde

In einem mit Stickstoff gespülten und mit einem Rührer versehenen Autoklaven wurden 2046g technisches Hexan vorgelegt. Danach wurde unter Rühren zu dem vorgelegten Hexan 0.5 mmol Neodymversatat, 12.50 mmol Diisobutylaluminiumhydrid und 0.47 mmol Trichlorsilan gegeben. Zu diesem Gemisch wurde dann 450 g getrocknetes, destabilisiertes 1,3-Butadien zudosiert. Die Polymerisation des 1,3-Butadiens wurde bei einer Temperatur von 60°C bis zum quantitativem Umsatz des Monomers durchgeführt.

Das dabei erhaltene Polybutadien wurde direkt - in situ - mit 12.5 mmol getrocknetem N,N,N',N'-Tetramethylethylendiamin und 12.5 mmol n-Butyllithium versetzt und das Gemisch bei einer Temperatur von 100°C ca. 1 Stunde gerührt.

### a) Umsetzung des metallierten Polybutadienanions mit reaktiven Doppelbindungen enthaltenden Verbindungen

Das in 1) erhaltene metallisierte Polybutadienanion wurde mit 100 mmol Glycidylmethacrylat versetzt und das Gemisch ca. eine Stunde bei 100°C gerührt. Danach wurde der Reaktorinhalt abgekühlt und die Reaktion mit Ethanol abgestoppt. Das erhaltene Produkt wurde wie oben beschrieben stabilisiert und bei 60°C getrocknet.

Die Analyse der erhaltenen modifizierten Polymere ergab folgende Daten:

| | | | Mikrostruktur | | | GPC | | | DSC |
|---|---|---|---|---|---|---|---|---|---|
| ML 1+4 | LV vor Modifizierung | LV nach Modifizierung | cis | trans | vinyl | Mw | Mn | Polyd. | Tg |
| ME | mPas | mPas | % | % | % | g/mol | g/mol | | °C |
| 41 | 827 | 554 | 97,0 | 1,8 | 1,2 | 584330 | 171862 | 3,4 | -104,9 |

| | | | | | | | | | |
|---|---|---|---|---|---|---|---|---|---|
| LV: Lösungsviskosität | | | | | | | | | |

### Beispiel 4 (Vergleich)

### 1) Herstellung von mit Lithium metallisiertem Polybutadien, das durch Polymerisation von Butadien mit anionischen Katalysatoren erhalten wurde

In einem temperierbaren Rührautoklaven wurden bei 20°C 272 mg sec. BuLi (3.32 ml einer 1.3 molaren Lösung in Hexan) in 5270 g (8000 ml) n-Hexan vorgelegt und anschließend mit 500 g Butadien versetzt. Sofort nach Zugabe des Butadiens wurde der Autoklav auf 50°C temperiert und mit N₂ ein Überdruck von 1.5 bar eingestellt. Anschließend wurde 8 h bei 50°C bis zum quantitativen Umsatz des Monomeren polymerisiert. Der 1,4-cis-Gehalt im Polymeren betrug 37 %.

Das dabei erhaltene Polybutadien wurde direkt - in situ - mit 0.027 mol getrocknetem N,N,N'N'-Tetramethylethylendiamin und 0.027 mol n-Butyllithium versetzt und das Gemisch bei einer Temperatur von 100°C ca. 1 Stunde gerührt.

### a) Umsetzung des metallierten Polybutadienanions mit Morpholin-N-carbonsäurechlorid

Das in 1) hergestellte Polybutadienanion wurde mit 0.055 mol Morpholin-N-Carbonsäure-chlorid versetzt und das Gemisch ca. eine Stunde bei 100°C gerührt. Danach wurde der Reaktorinhalt abgekühlt und die Reaktion mit Ethanol abgestoppt. Das erhaltene Produkt wurde anschließend mit etwa 3 g 2,6-Di-*tert*.-butyl-4-methylphenol stabilisiert. Und bei 60°C getrocknet.

Die Analyse des erhaltenen Vergleichspolymers ergab folgende Daten:

| 1,4-Anteil (Gew.-%) | 1,2-Anteil (Gew.-%) | Elementaranalyse (Stickstoff in ppm) | Tg [°C] | Mooneyviskosität (MI 1+4, 100°C) | Molgewicht (GPC, g/mol) |
|---|---|---|---|---|---|
| 92 | 7,8 | 101 | -85 | 53 | 283000 |

Die in den vorstehenden Beispielen modifizierten Polybutadiene wurden in Mischungen eingearbeitet, die typisch für die Herstellung von Reifenlaufflächen sind. Es wurden Mischungen mit Kieselsäure als Füllstoff und mit Ruß als Füllstoff hergestellt (siehe näheres in den nachfolgenden Tabellen).

### Kieselsäuremischung

| | Polares LiBR^{a)} | Polares NdBR 1^{b)} | Polares NdBR 2^{c)} |
|---|---|---|---|
| Buna VSL 5025-0 HM (LSBR) | 54 | 54 | 54 |
| TSR 5, Defo 700 (NR) | 10 | 10 | 10 |
| Polar modifiziertes LiBR | 36 | 0 | 0 |
| Polar modifiziertes NdBR 1 | 0 | 36 | 0 |
| Polar modifiziertes NdBR 2 | 0 | 0 | 36 |
| Mineralöl* | 37,5 | 37,5 | 37,5 |
| Vulkasil S******** | 70 | 70 | 70 |
| Silan Si 69********* | 5.6 | 5.6 | 5.6 |
| ZnO RS | 2.5 | 2.5 | 2.5 |
| Stearinsäure | 1 | 1 | 1 |
| Antilux 654** | 1.5 | 1.5 | 1.5 |
| Vulkanox HS**** | 1 | 1 | 1 |
| Vulkanox 4020*** | 1 | 1 | 1 |
| Vulkacit CZ* * * * * | 1.8 | 1.8 | 1.8 |
| Vulkacit D******* | 2 | 2 | 2 |
| Schwefel | 1.5 | 1.5 | 1.5 |
| | | | |
| **Mischungsegenschaften, DIN 53523** | | | |
| Mooney Viskosität ML1+4@100°C | >200 | 67 | 61 |
| | | | |
| **Vulkanisateigenschaften, ISO 37** | | | |
| Festigkeit, MPa | 16,8 | 16.5 | 18.5 |
| Bruchdehnung, % | 260 | 486 | 532 |
| Spannungswert 100%, MPa | 5,1 | 2.3 | 2.3 |
| Spannungswert 300%, MPa | n.m. | 8.3 | 8.1 1 |
| Härte 23°C, Shore A | 66 | 62 | 63 |
| Härte 70°C, Shore A70 | 65 | 62 | 62 |
| Elastizität 23°C, % | 32 | 41 | 42 |
| Elastizität 70°C, % | 48 | 58 | 58 |
| | | | |
| **Roelig 10 Hz, DIN 53513** | | | |
| tan delta-20°C | 0,573 | 0.606 | 0.619 |
| 0 | 0,372 | 0.317 | 0.314 |
| 23 | 0,228 | 0.182 | 0.167 |
| 60 | 0,132 | 0.110 | 0.106 |

### Rußmischung

| | | Polares LiBR^{a)} | Polares NdBR 1^{b)} | Polares NdBR 2^{c)} | Polares NdBR 3^{d)} | Polares NdBR 4^{e)} |
|---|---|---|---|---|---|---|
| Buna VSL 5025-0 HM (LSBR) | | 60 | 60 | 60 | 60 | 60 |
| Polar modifiziertes LiBR | | 40 | 0 | 0 | 0 | 0 |
| Polar modifiziertes NdBR 1 | | 0 | 40 | 0 | 0 | 0 |
| Polar modifiziertes NdBR 2 | | 0 | 0 | 40 | 0 | 0 |
| Polar modifiziertes NdBR 3 | | 0 | 0 | 0 | 40 | 0 |
| Polar modifiziertes NdBR 4 | | 0 | 0 | 0 | 0 | 40 |
| Ruß N 234 | | 50 | 50 | 50 | 50 | 50 |
| Mineralöl* | | 5 | 5 | 5 | 5 | 5 |
| ZnO RS | | 3 | 3 | 3 | 3 | 3 |
| Stearinsäure | | 2 | 2 | 2 | 2 | 2 |
| Antilux 654** | | 1.5 | 1.5 | 1.5 | 1.5 | 1.5 |
| Vulkanox HS**** | | 1 | 1 | 1 | 1 | 1 |
| Vulkanox 4020*** | | 1 | 1 | 1 | 1 | 1 |
| Vulkacit CZ****** | | 1.4 | 1.4 | 1.4 | 1.4 | 1.4 |
| Vulkacit D******* | | 0.3 | 0.3 | 0.3 | 0.3 | 0.3 |
| Schwefel | | 1.8 | 1.8 | 1.8 | 1.8 | 1.8 |
| | | | | | | |
| **Mischungseigenschaften, DIN 53523** | | | | | | |
| **Mooney Viskosität ML1+4@110°C** | | **114** | **93** | **83** | **81** | **82** |

| | Polares LiBR^{a)} | | Polares NdBR 1^{b)} | Polares NdBR 2^{c)} | Polares NdBR 3^{d)} | Polares NdBR 4^{e)} |
|---|---|---|---|---|---|---|
| **Vulkanisateigenschaften, ISO 37** | | | | | | |
| Festigkeit, Mpa | 18,5 | | 20.2 | 21.2 | 22.49 | 22.94 |
| Bruchdehnung, % | 310 | | 376 | 425 | 443 | 427 |
| Spannungswert 100%, Mpa | 3,8 | | 2.9 | 2.7 | 2.62 | 2.6 |
| Spannungswert 300%, Mpa | 16,4 | | 14.8 | 12.9 | 13.25 | 14.1 |
| Härte 23°C, Shore A | 67 | | 68 | 68 | 66.1 | 68.2 |
| Härte 70°C, Shore A70 | 62 | | 64 | 63 | 63.6 | 65.4 |
| Elastizität 23°C, % | 37 | | 42 | 39 | 45.6 | 49.6 |
| Elastizität 70°C, % | 45 | | 56 | 54 | 52.6 | 54.5 |
| | | | | | | |
| **Roelig, 10 HZ, DIN 53513** | | | | | | |
| tan delta -20°C | 0,352 | | 0.475 | 0.456 | 0.393 | 0.373 |
| 0°C | 0.277 | | 0.274 | 0.28 | 0.236 | 0.21 |
| 23°C | 0.210 | | 0.198 | 0.201 | 0.187 | 0.169 |
| 60°C | 0.163 | | 0.145 | 0.144 | 0.141 | 0.13 |
| | | | | | | |
| Polar modifiziertes NdBR 1 | | N,N-Dimethylcarbamidsäurechlorid | | | | |
| Polar modifiziertes NdBR 2 | | Morpholinsäurechlorid | | | | |
| Polar modifiziertes NdBR 3 | | Epoxidiertes Sojabohnenöl | | | | |
| Polar modifiziertes NdBR 4 | | Epichlorhydrin | | | | |
| Polar modifiziertes LiBR | | Morpholin-N-Carbonsäurechlorid | | | | |

| | | | | | | |
|---|---|---|---|---|---|---|
| * Enerthene 1849-1, Mineralölweichmacher, Mobil Schmierstoff GmbH ** Lichtschutzwachs, Rhein Chemie Rheinau *** Alterunsschutzmittel (6PPD), Bayer AG **** Alterungsschutzmittel (TMQ), Bayer AG ****** Sulfenamid Beschleuniger (CBS), Bayer AG ******* Guanidin Beschleuniger (DPG), Bayer AG ******** Kieselsäure, Bayer AG ********* Silan, Degussa a) modifiziertes LiBR aus Beispiel 4 (Vergleich) b) modifiziertes NdBR des Beispiels 1a) c) modifiziertes NdBR des Beispiels 1b) d) modifiziertes NdBR des Beispiels 2a) e) modifiziertes NdBR des Beispiels 2b) | | | | | | |

### Ergebnis:

Aus diesen Tabellen werden die Vorteile der modifizierten Seltenen-Erdmetall-Polybutadiene (NdBR) im Vergleich zu modifiziertem LiBR deutlich. Das Verarbeitungsverhalten der polar modifizierten NdBRs ist signifikant besser (geringere Mooneyviskositäten der Mischungen). Das mechanische Eigenschaftsprofil ist ebenfalls verbessert (Vulkanisateigenschaften) und das dynamische Verhalten nach Roelig zeigt deutliche Vorteile (größere Werte) bei tiefen Temperaturen, was üblicherweise mit der Traktion der Reifen auf nassen Fahrbahnoberflächen korreliert wird. Darüber hinaus werden niedrigere Werte bei hohen Temperaturen erhalten, was mit verringertem Rollwiderstand gleichgesetzt werden kann.

## Patentansprüche

1. Entlang der Polymerkette modifizierte Polymere auf Basis von konjugierten Dienen oder von konjugierten Dienen und vinylaromatischen Verbindungen mit einem Anteil an vinylaromatischen Verbindungen von bis zu 60 Gew.-%, einem Gehalt an cis-ständigen Doppelbindungen von ≥ 95 %, einem mittleren Molekulargewicht (M_{w}) von 50 000 bis 1 500 000 g/mol, einem Gelgehalt von ≤ 5 % und einem Modifizierungsgrad von 0,05 bis 20 Gew.-%.

2. Verfahren zur Herstellung von entlang der Polymerkette modifizierten Polymeren auf Basis von konjugierten Dienen oder von konjugierten Dienen und vinylaromatischen Verbindungen gemäß Anspruch 1, dass **dadurch gekennzeichnet ist, dass** man (a) die konjugierten Diene oder die konjugierten Diene und vinylaromatischen Verbindungen bei Temperaturen von -30 bis 130°C in Gegenwart von Verbindungen der Seltenen Erdmetalle und in Gegenwart eines inerten, aliphatischen Lösungsmittels polymerisiert, wobei der Wassergehalt des Reaktionsgemischs ≤ 1 000 ppm beträgt, (b) die erhaltenen 1,0 bis 1 000 mmol/100 g Polymer aktive Wasserstoffatome enthaltene Polymere mit 0,1 bis 200 mmol, bezogen auf 100 g Polymer, metallorganischen Verbindungen oder mit den Metallen selbst, wobei die Metalle der metallorganischen Verbindungen auszuwählen sind aus der Gruppe der Alkali- oder Erdalkalimetalle, umsetzt, in Gegenwart von 0,1 bis 200 mmol, bezogen auf 100 g Polymer, zur koordinativen Bindung mit den metallisierten Polymeranionen-fähigen Verbindungen bei Temperaturen von 20 bis 200°C und (c) bei Temperaturen von 0 bis 200°C die erhaltenen, stabilisierten Polymeranionen mit 0,01 bis 200 mmol, bezogen auf 100 g Polymer, organischen Verbindungen umsetzt, die eine zur Reaktion mit den Polymeranionen-fähige Gruppe und mindestens eine polare Gruppe im Molekül enthalten, wobei die polare Gruppen Elemente der III., IV., V., VI. oder VII. Hauptgruppe des PSE oder Kombinationen davon enthalten, und die zur Reaktion mit den Polymeranionen-fähigen Gruppen auszuwählen sind aus Carbonylgruppen, Säurechloridgruppen, Metallhalogenidgruppen, Sulfenylgruppen, Sulfonylgruppen, Aminochloridgruppen, reaktive Doppelbindungen enthaltende Gruppen, Epoxidgruppen, Isocyanatgruppen, Nitrilgruppen sowie Silizium- und Zinn-organische Gruppen, in Anwesenheit von aprotischen, organischen Lösungsmitteln umsetzt.

3. Verwendung der modifizierten Polymere nach Anspruch 1 zur Herstellung von Kautschukformkörpern aller Art, insbesondere zur Herstellung von Reifen und Reifenbauteilen sowie HIPS- und ABS-Kunststoffen und Golfbällen.

## Claims

1. Backbone-modified polymers based on conjugated dienes or on conjugated dienes and vinyl aromatic compounds and having a content of vinyl aromatic compounds of up to 60 wt.%, a proportion of cis-position double bonds of ≥ 95%, a mean molecular weight (M_{w}) of 50 000 to 1 500 000 g/mol, a gel content of ≤ 5% and a degree of modification of 0.05 to 20 wt.%.

2. Process for producing backbone-modified polymers based on conjugated dienes or on conjugated dienes and vinyl aromatic compounds according to Claim 1, **characterized in that** (a) the conjugated dienes or the conjugated dienes and vinyl aromatic compounds are polymerized at temperatures of -30 to 130°C in the presence of rare earth metal compounds and in the presence of an inert, aliphatic solvent, the water content of the reaction mixture being ≤ 1000 ppm, (b) the resulting polymers, containing 1.0 to 1000 mmol/100 g of polymer of active hydrogen atoms, are reacted with 0.1 to 200 mmol, based on 100 g of polymer, of organometallic compounds or with the metals themselves, the metals of the organometallic compounds being selected from the group of alkali metals or alkaline earth metals, in the presence of 0.1 to 200 mmol, based on 100 g of polymer, of compounds capable of forming coordinate bonds with the metallized polymer anions, at temperatures of 20 to 200°C, and (c) the stabilized polymer anions obtained are reacted at temperatures of 0 to 200°C with 0.01 to 200 mmol, based on 100 g of polymer, of organic compounds containing a group capable of reacting with the polymer anions and at least one polar group in the molecule, the polar groups containing elements of main groups III, IV, V, VI or VII of the periodic table of the elements or combinations thereof, and the groups capable of reacting with the polymer anions being selected from carbonyl groups, acid chloride groups, metal halide groups, sulphenyl groups, sulphonyl groups, aminochloride groups, groups containing reactive double bonds, epoxide groups, isocyanate groups, nitrile groups and organosilicon and organotin groups, in the presence of aprotic, organic solvents.

3. Use of the modified polymers according to Claim 1 for producing moulded rubber articles of any kind, in particular for producing tyres and tyre structural parts and also HIPS and ABS plastics and golf balls.

## Revendications

1. Polymères modifiés sur la chaîne polymère à base de diènes conjugués ou de diènes conjugués et de composés vinylaromatiques, avec une proportion de composés vinylaromatiques jusqu'à 60% en poids, une teneur en liaisons doubles en position cis de ≥ 95% en poids, un poids moléculaire moyen (M_{w}) de 50 000 à 1 500 000 g/mol, une teneur en gel ≤ 5% et un degré de modification de 0,05 à 20% en poids.

2. Procédé de préparation de polymères modifiés sur la chaîne polymère à base de diènes conjugués ou de diènes conjugués et de composés vinylaromatiques selon la revendication 1,
**caractérisé en ce qu'**on polymérise (a) les diènes conjugués ou les diènes conjugués et les composés vinylaromatiques à des températures de -30 à 130°C en présence de composés des métaux des terres rares et en présence d'un solvant inerte aliphatique, la teneur en eau du mélange réactionnel étant ≤ 1000 ppm; (b) on fait réagir les polymères obtenus contenant de 1,0 à 1000 mmol/100 g de polymère d'atomes d'hydrogène actif, avec 0,1 à 200 mmol, sur base de 100 g de polymère, de composés organométalliques ou avec les métaux eux-mêmes, les métaux des composés organométalliques étant à sélectionner parmi le groupe des métaux alcalins ou alcalino-terreux, en présence de 0,1 à 200 mmol, sur base de 100 g de polymère, pour réaliser une liaison de coordination avec les composés métallisés capables d'anions polymères, à des températures de 20 à 200°C, et (c) on fait réagir, à des températures de 0 à 200°C, les anions polymères stabilisés obtenus avec 0,01 à 200 mmol, sur base de 100 g de polymère, de composés organiques qui contiennent un groupe apte à réagir avec des anions polymères et au moins un groupe polaire dans la molécule, les groupes polaires contenant des éléments du III^{è}, IV^{è}, V^{è}, VI^{è} ou VII^{è} groupe principal du PSE, ou des combinaisons de ceux-ci, et les groupes aptes à réagir avec les anions polymères seront choisis parmi les groupes carbonyle, les groupes chlorure d'acide, les groupes halogénure de métal, les groupes sulfényle, les groupes sulfonyle, les groupes aminochlorure, les groupes contenant des liaisons doubles réactives, les groupes époxyde, les groupes isocyanate, les groupes nitrile ainsi que les groupes organosilicium et organostanniques, en présence de solvants aprotiques organiques.

3. Utilisation des polymères modifiés selon la revendication 1, pour la fabrication de corps moulés de caoutchouc de tout type, en particulier pour la fabrication de pneumatiques et de pièces de pneumatiques ainsi que de matériaux synthétiques HIPS et ABS et de balles de golf.
